# EUROPEAN PATENT APPLICATION

(11) **EP 4 173 997 A1**
(43) Date of publication of application: **03.05.2023**
(21) Application number: 22204060.2
(22) Date of filing: 27.10.2022
(51) Int. Cl.: B65G 17/24

(54) **CHAIN CONVEYOR WITH DYNAMIC TRACTION CONTROL**

(30) Priority: 27.10.2021 US 202163263134 P; 26.10.2022 US 202218049994
(71) Applicant: NCC Automated Systems, Inc., Souderton, Pennsylvania 18964 (US)
(72) Inventor: SCHWAR, Ron, Souderton, 18964 (US)
(74) Representative: Ipey

(57) **Abstract**

A chain conveyor including: a frame; at least one chain configured to move on the frame, the at least one chain including a plurality of bearings configured to rotate freely; and a dynamic traction control system including: a flexible member provided to the frame adjacent to but not touching the plurality of bearings; a control body provided to the flexible member; a pressure device in fluid connection with the control body such that the pressure device is configured to selectively expand/contract the flexible member such that it comes into or out of contact with the bearings; and a controller in electronic communication with the pressure device to expand the flexible member to provide traction control when needed and contract the flexible member when traction control is not needed. A kit including elements of the dynamic traction control system may be provided to retrofit existing chain conveyors.

## Description

### FIELD

The present disclosure relates generally to chain conveyors. More particularly, the present disclosure relates to a chain conveyor with a system for dynamic traction control and a kit to retrofit a chain conveyor to provide dynamic traction control.

### BACKGROUND

Chain conveyors have been used in various industries for many years as a way of moving materials, parts, products, pallets or the like through a process such as a manufacturing process. Chain conveyors use an endless chain that runs over sprockets, gears or the like at either end of the conveyor to propel the materials, parts, products, pallets or the like. In this document, we will refer to the item moved as a pallet, but it will be understood that this may apply to materials, parts, products or the like depending on the circumstances. There are various types of chain conveyors, but the focus of this document is on a chain conveyor in which the chain includes bearings mounted on the chain to support the pallet and the pallet is driven by friction between the bearings and the pallet. In some cases, a pallet may be stopped at a location on the chain conveyor by inserting a barrier in front of the pallet. In this case, the chain continues to run under the pallet because the bearings continue to roll beneath the pallet.

When the barrier is removed, the bearings begin to move the pallet forward again due to friction. However, in conventional chain conveyors using friction, the pallet only begins moving slowly because it can take time for friction between the bearings and the pallet to build and bring the pallet up to the speed of travel of the chain. Some attempts have been made to provide for better acceleration of pallets after a stop, however, these attempts have generally been static and need to be designed into a chain conveyor in advance and at specific locations. It is therefore desirable to provide an improved chain conveyor with a system for dynamic traction control and a kit to retrofit a chain conveyor to provide dynamic traction control.

The above information is presented as background information only to assist with an understanding of the present disclosure. No determination has been made, and no assertion is made, as to whether any of the above might be applicable as prior art with regard to the present disclosure.

### SUMMARY

According to an aspect herein, there is provided a chain conveyor including: a frame; at least one chain configured to move on the frame, the at least one supporting a plurality of bearings configured to rotate freely relative to the chain; and a dynamic traction control system including: a flexible member provided to the frame adjacent to the plurality of bearings; a control body provided to the flexible member; a pressure device in fluid connection to the control body and configured to expand the flexible member to be in contact with the plurality of bearings to provide dynamic traction control; and a controller in electronic communication with the pressure device to selectively expand/contract the flexible member when dynamic traction control is needed in an area of the chain conveyor covered by the flexible member.

According to another aspect herein, there is provided a method for dynamic tractions control in a chain conveyor, the chain conveyor including a chain provided with a plurality of bearings for carrying pallets, the method including: providing a flexible bladder adjacent to the bearings; selectively expanding the flexible bladder to make contact with the bearings when additional traction/acceleration of the pallets is required. In some cases, the method may also include determining the amount of expansion required based on parameters related to the pallet, chain conveyor, the function of the dynamic control or the like.

According to another aspect herein, there is provided a chain conveyor including: a frame; at least one chain configured to move on the frame, the at least one chain including a plurality of links and at least some of the plurality of links supporting a plurality of bearings that are configured to rotate freely relative to the links; and a dynamic traction control system including: a flexible member provided to the frame adjacent to but not touching a surface of the plurality of bearings; a control body provided to the flexible member; a pressure device in fluid connection with the control body such that the pressure device is configured to selectively expand the flexible member to come in contact with the bearings or contract the flexible member out of contact with the bearings; and a controller in electronic communication with the pressure device to expand the flexible member to provide traction control when needed and contract the flexible member when traction control is not needed.

In some cases, the flexible member may have an elongated shape along the direction of the chain.

In some cases, the control body may be at one end of the flexible member and a stopper body may be provided at another end of the flexible member and the stopper body may be configured to seal the flexible member and hold the flexible member in place on the frame.

In some cases, the flexible member is cylindrical.

In some cases, the flexible member may include an internal inflatable bladder and an external covering for the internal inflatable bladder.

In some cases, the pressure device may include a pneumatic or hydraulic system.

In some cases, the at least one chain may include chain bearings that move on the frame along at least one rail provided to the frame, wherein the rail has a circular profile.

In some cases, the controller is configured to expand or contract the flexible member using a plurality of levels.

According to another aspect herein, there is provided a method for dynamic traction control in a chain conveyor, the chain conveyor including a chain provided with a plurality of bearings for carrying pallets, the method including: providing a flexible bladder adjacent to the bearings; and selectively expanding the flexible bladder to make contact with the bearings when additional traction is required.

In some cases, the method may further include expanding the flexible bladder based on parameters related to the pallet and chain conveyor.

In some cases, the selectively expanding may include selecting a level of expansion.

In some cases, the selectively expanding may include contracting the flexible bladder when additional traction is not required.

According to another aspect herein, there is provided a kit to retrofit a chain conveyor to provide dynamic traction control, the chain conveyor including a frame, at least one chain configured to move on the frame, the at least one chain including a plurality of links and at least some of the plurality of links supporting a plurality of bearings configured to rotate freely relative to the links, the kit including: a flexible member provided to the frame adjacent to but not touching a surface of the plurality of bearings; a control body provided to the flexible member; a pressure device in fluid connection with the control body such that the pressure device is configured to selectively expand the flexible member to come in contact with the bearings or contract the flexible member out of contact with the bearings; and a controller in electronic communication with the pressure device to expand the flexible member to provide traction control when needed and contract the flexible member when traction control is not needed.

In some cases, the flexible member may have an elongated cylindrical shape with a circular cross-section.

In some cases, the flexible member may include an internal inflatable bladder and an external covering for the internal inflatable bladder.

Other aspects and features of the present disclosure will become apparent to those ordinarily skilled in the art upon review of the following description of specific embodiments in conjunction with the accompanying figures.

### BRIEF DESCRIPTION OF THE FIGURES

Embodiments of the present disclosure will now be described, by way of example only, with reference to the attached Figures.
Fig. 1A is a perspective view of a chain conveyor according to an embodiment;
Fig. 1B is a perspective view of another chain conveyor according to an embodiment;
Fig. 1C is a partially cut-away perspective view of another chain conveyor according to an embodiment;
Fig. 2 is a side section view of a portion of a chain conveyor illustrating a system for dynamic traction control according to an embodiment;
Fig. 3 is a section view along section A-A in Fig. 2;
Fig. 4 is a section view along section B-B in Fig. 2;
Fig. 5A is an enlarged section view illustrating a portion of Fig. 3 when a system for dynamic traction control is not activated;
Fig. 5B is an enlarged section view illustrating a portion of Fig. 3 when the system for dynamic traction control is activated;
Fig. 6A is an enlarged section view of Fig. 3 when the system for dynamic traction control is not activated;
Fig. 6B is an enlarged section view of Fig. 3 when the system for dynamic traction control is activated; and
Fig. 7 is a perspective view of a system for dynamic traction control according to another embodiment herein; and
Fig. 8 is a flowchart of a method for dynamic traction control of a chain conveyor according to an embodiment.

### DETAILED DESCRIPTION

Generally, the present disclosure provides a chain conveyor with a system for dynamic traction control and a kit to retrofit a chain conveyor to provide dynamic traction control. In particular, a chain conveyor is provided with a system for dynamic traction control. The system general includes a bladder placed in proximity to bearings on a chain of the chain conveyor such that the bladder can be enlarged to provide additional friction between the bearings on the chain conveyor and a pallet sitting on the chain conveyor. The bladder may be configured such that the bearing can be placed in various places along the chain conveyor or, some cases, may be provided along the entire conveyor. Embodiments of the chain conveyor herein are intended to enable smoother, faster acceleration of pallets on chain conveyors. This need for acceleration may occur when a pallet first enters the chain conveyor, after a stop along the chain conveyor, or the like.

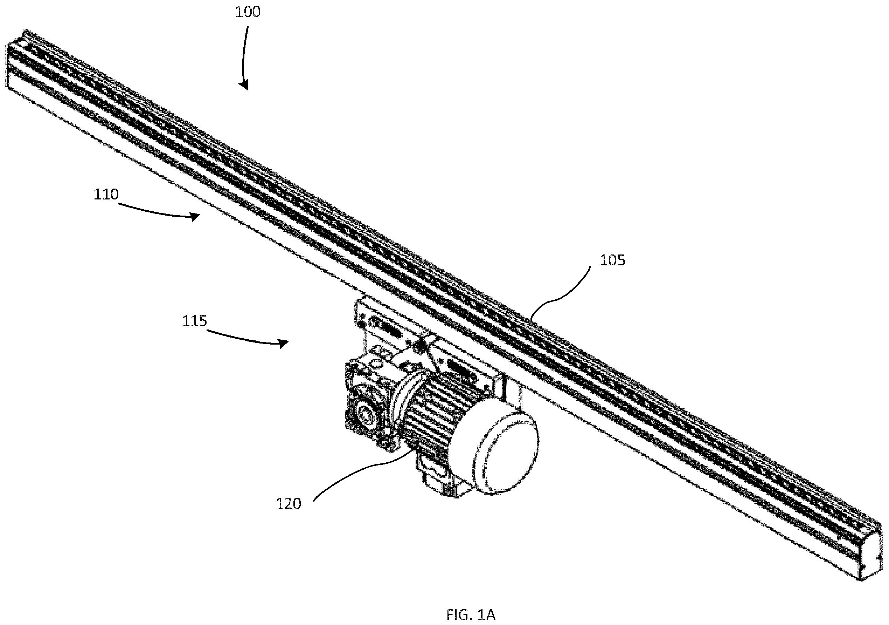

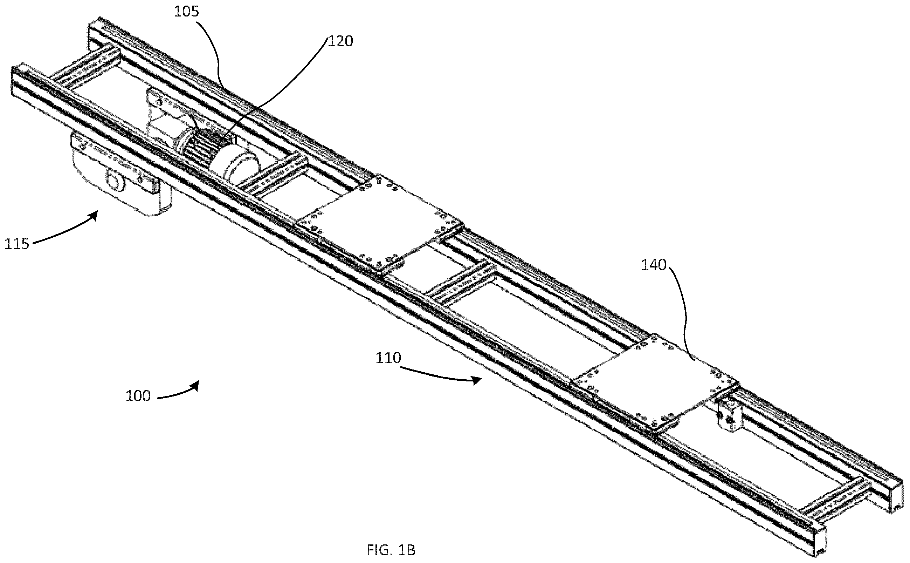

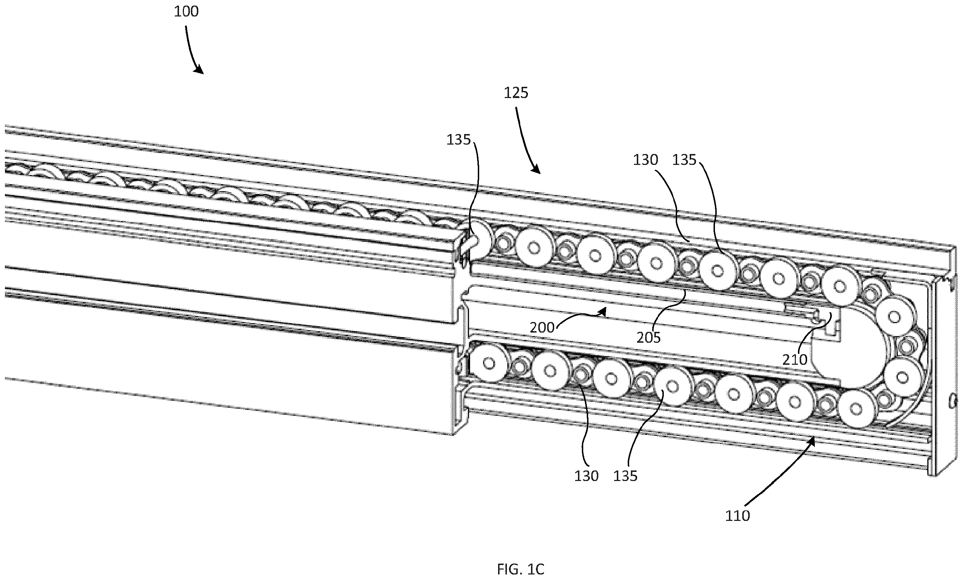

Figs. 1A and 1B are perspective views of a chain conveyor 100, one with a single chain and one with two chains. Fig. 1C is a cut-away perspective view of a chain conveyor according to an embodiment herein. As shown in Figs. 1A, 1B and 1C, the chain conveyor 100 includes a frame 105, which defines a track 110, and supports a drive system 115. The drive system 115 includes a motor 120 to drive at least one chain 125 around the track 110. In some cases, there will be two chains, as shown in Fig. 1B. The frame 105 supports the chain 125 via the track 110, which runs the length of the chain conveyor 100 on or in the frame 105. Each chain 125 is typically referred to as an endless loop chain. Each chain 125 includes a plurality of chain links 130, at least some of which include a roller/bearing 135 that is configured to rotate about a shaft 137 in relation to the chain link 130 to which it is provided. In operation, the chain 125 is moved forward or backwards on the chain conveyor 100. When a pallet 140 is placed on the chain conveyor 100, the pallet makes contact with the bearings and, when the chain 125 is moving, the bearings 135 in contact with the pallet will have increased friction between the bearings 135 and the shaft 137 and will cause the pallet to begin moving in the direction the chains 125 are moving. In some cases, a pallet may be stopped on the chain conveyor 100 by, for example, an actuator (not shown), causing a stopper (not shown) to be placed in the pallet's path along the conveyor. In this situation, the chain 125 will continue moving and the bearings 135 will remain in contact with the pallet (the bearings will be rolling along the bottom of the pallet) but the stopper will overcome any forward motion imparted to the pallet such that the pallet will remain in place (the bearings will be rolling along the bottom of the pallet). When the stopper is removed (by, for example, the actuator being activated again), the friction between the bearings and the shaft caused by the pallet weight will gradually build and the pallet will start moving slowly and eventually accelerate to the speed of the chain again.

One of the issues with conventional chain conveyors is that the start up of a stopped pallet can be quite slow and gradual because of the reliance on the buildup of friction between the bearings and the shafts. The present disclosure provides for an improved system and method for providing control of the traction between the bearings and the pallet that is referred to as dynamic traction control.

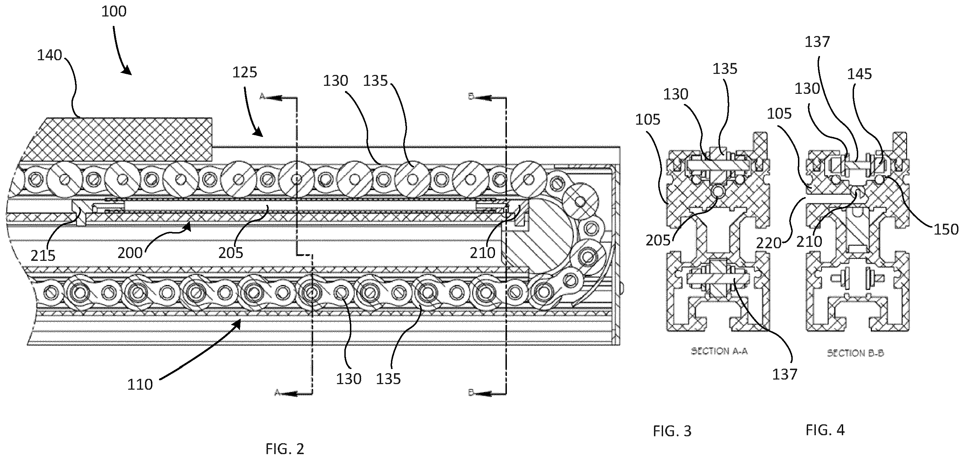

Fig. 2 is a side section view of a portion of a chain conveyor 100 illustrating a system for dynamic traction control 200 according to an embodiment. Fig. 3 is a section view along section A-A in Fig. 2 and Fig. 4 is a section view along section B-B in Fig. 2.

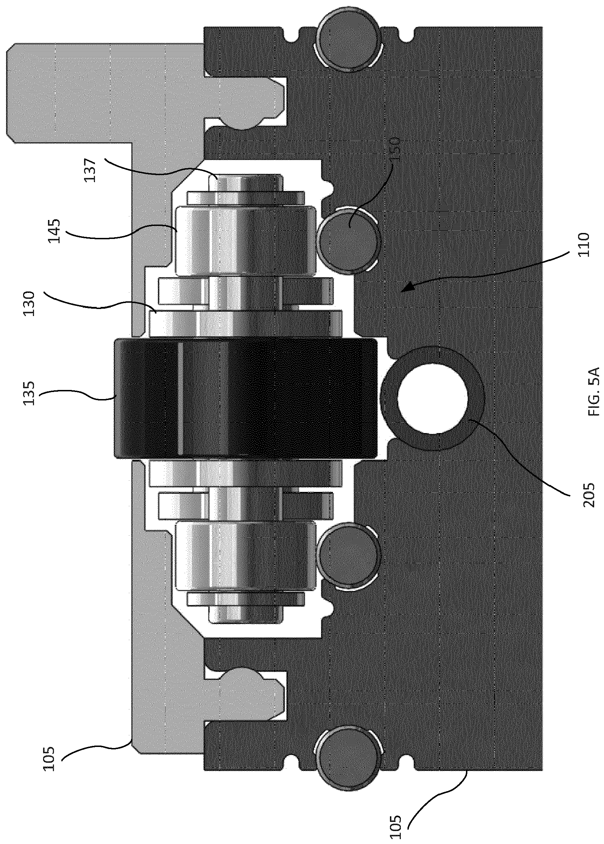

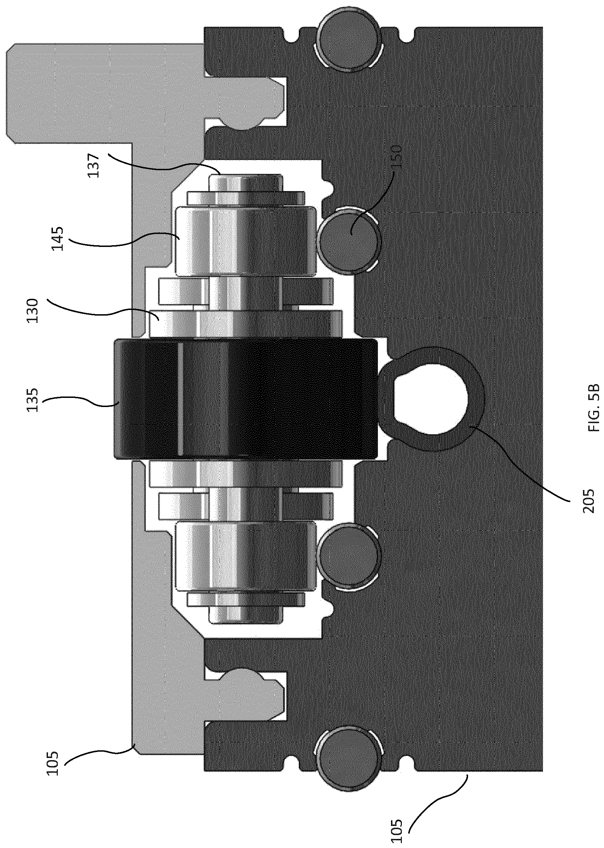

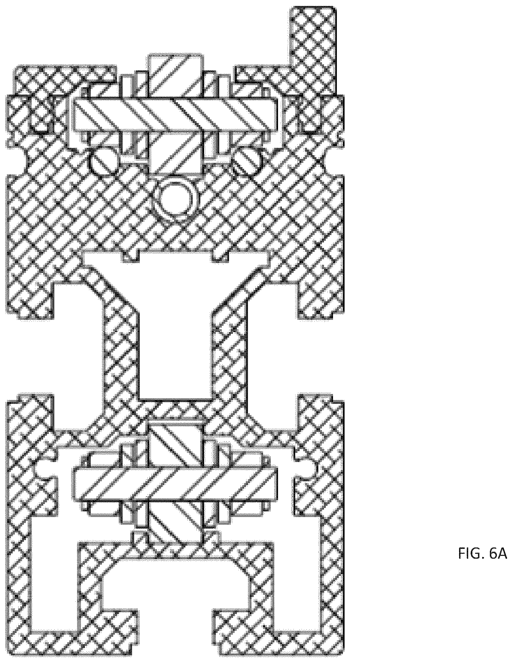

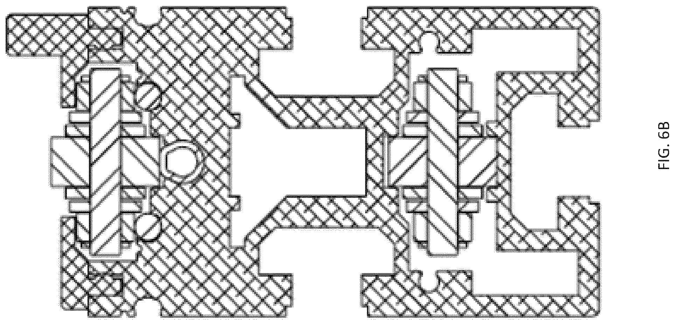

As shown in Figs. 2 to 4, the chain 125 includes the plurality of chain links 130 and at least some chain links 130 (in this case all) include the bearing/roller 135 and shaft 137, with the bearing being free to roll relative to the chain. The chain links 130 also include chain bearings 145 that extend from the chain links and are configured to run in the tracks 110 provided in the frame 105 of the chain conveyor 100. The system for dynamic traction control 200 includes a flexible bladder (in this case, a pneumatic bladder/tube) 205 that extends lengthwise along a portion of the chain conveyor 100. The flexible bladder 205 is provided between a control body 210 and a stopper body 215. The control body 210 is provided at one end of the flexible bladder 205 and when installed in a chain conveyor is in communication with a pressurized source (not shown in Fig.2, 3, or 4) via, for example, an access opening 220 in the frame 105. The pressurized source is configured to expand or contract the flexible bladder 205. The stopper body 215 is provided at the other end of the flexible bladder 205 and seals the flexible bladder 205. Each of the control body and the stopper body are configured to connect with the frame so that the control body and the stopper body stay in place relative to the frame. In the embodiment illustrated, the control body and stopper body have a protrusion that anchors in the frame. The system 200 is shown in more detail in Figs 5A, 5B and 6.

Fig. 5A is an enlarged section view showing a portion of Fig. 3 when the system for dynamic traction control is not activated. Fig. 5B is an enlarged section view showing a portion of Fig. 3 when the system for dynamic traction control is activated.

Fig. 5A illustrates the frame 105 of the chain conveyor 100, the track 110 for the chain 125, a chain link 130 including a bearing/roller 135 and chain bearings 145. The chain bearings 145 move along the track 110. Generally speaking, the roller 135 is free to roll on the shaft 137 relative to its related chain link 130. As shown in Fig. 5A, the flexible bladder 205 is configured to fit below the bearings 135 and adjacent to the bearings 135. In this case, the flexible bladder 205 is placed in a groove in the frame 105 but various other arrangements are possible. In Fig. 5A, the flexible bladder 205 is not activated so there is no contact between the flexible bladder 205 and the bearings 135.

In Fig. 5B, the flexible bladder 205 has been expanded such that the flexible bladder 205 makes contact with the bearings 135. As the chain 125 moves over the flexible bladder 205 and as the flexible bladder 205 expands, each bearing 135 making contact will have increased friction vis-à-vis the flexible bladder 205 and there will be increased friction between the bearing and the shaft. Because of the increased friction, the bearing will generally not be able to roll backwards as easily under the pallet. As such, when there is a pallet placed on the chain conveyor, the bearing will not roll as freely, and the combination of contact from the flexible bladder, through the bearing and shaft to the pallet will be such that the bearing cannot roll backwards on the pallet as easily and the pallet will accelerate more quickly, that is, the traction with the pallet will be increased. The ability to inflate and deflate the flexible bladder thus provides dynamic traction control. The mechanical arrangement of these elements has been found to result in a pallet accelerating at approximately 2 times more than would otherwise be the case.

As shown in Figs. 5A and 5B, the track 110 includes rails 150 that are formed to have a round cylindrical shape and are placed in the frame 105 to support the chain bearings 145. Generally speaking, the rails 150 are made from a hardened material. The circular cross section of the rails 150 provides for a more defined contact area with the chain bearings and is intended to result in less wear overall or at least less wear on outside/inside edges of the chain bearings than might occur with, for example, a flat track or the like. The shape of the rails can also make it possible to merely rotate the rails if one "side" becomes worn. Further, the shape of the rails can also make it easier to replace the rails when they wear because the rails can slide out of the frame longitudinally. In this case, the rails are supported in a groove in the frame but other types of arrangements may also be possible.

Figs. 6A and 6B are similar to Figs. 5A and 5B but show additional detail of the frame, track and the like. Fig. 6A shows the flexible bladder when inactivated and Fig. 6B shows the flexible bladder when activated.

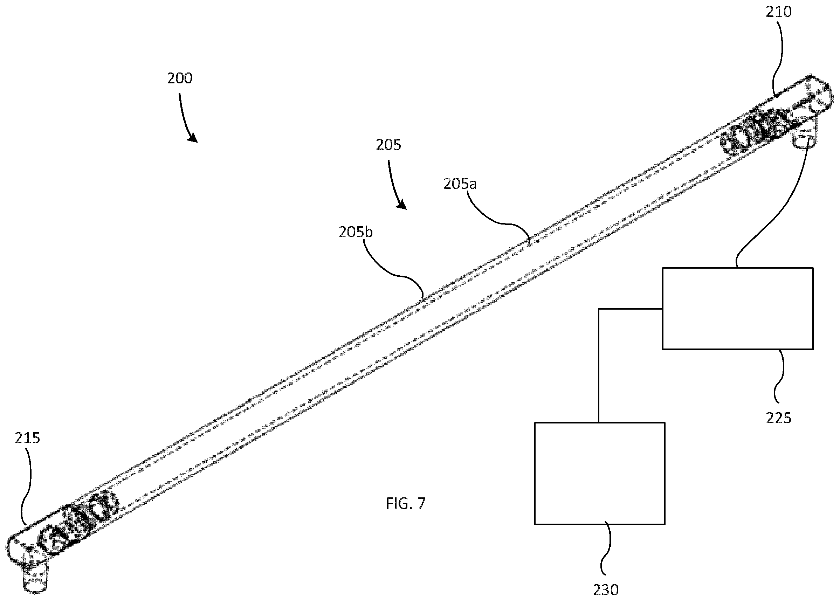

Fig. 7 is a perspective view of a system 200 for dynamic traction control according to another embodiment herein. Similar reference numbers will be used for similar items as those in other embodiments herein. In this embodiment, the system 200 is configured to be retrofitted into an existing chain conveyor, to be a replacable part in a chain conveyor, part of a kit for retrofitting or replacement, or the like. The system 200 is illustrated in place in the figures above. The system 200 includes the control body 210, the stopper body 215 and the flexible bladder 205. The flexible bladder 205 is shaped as a tube and extends between the control and stopper bodies 210, 215. The control body 210 is configured to connect with a pressure device 225 that is a source of air, fluid, or the like to allow selective expansion/contraction of the flexible bladder 205. The system 200 also includes a controller 230 to control the pressure device 225 to control when the flexible bladder 205 is expanded/contracted or allowed to relax to an initial shape. As shown in Fig. 7, the flexible bladder 205 may, in some embodiments, including those described above, include an internal flexible bladder 205a and a flexible external cover 205b or the like. In this case, the external cover 205b can provide protection.

It will be understood that the pressure applied to the flexible bladder may be adjusted according to various parameters such as the weight of the pallets being moved, the desired acceleration profile, the desired function of the increased acceleration, the amount of increased acceleration, or the like. The system may be configured such that the flexible bladder may be inflated or deflated in stages/levels or the like. For example, settings including states/levels from 1-5, 1-10 or the like. In some cases, embodiments of the system herein may be used to accelerate a pallet from a stopped position while in other cases, the system may be used to provide a different gap (larger/smaller) between pallets that may already be moving or the like. Since embodiments of the system can be configured to be placed at various points on the chain conveyor or, in some cases, over the entire chain conveyor, the dynamic traction control can be very configurable.

It will be understood that in some cases, the stopper body may also be configured as a control body with a connection to either the same or a different pressure device. The stopper body and control body may also be configured to be at either end of the flexible bladder and may be configured to be interchangeable depending on a setting or the like.

The pressure device may be a pneumatic, hydraulic or other type of device (e.g. pump or the like) to provide pressurized air or fluid into and out of the flexible bladder to cause expansion and contraction of the flexible bladder.

The controller may be a programmable logic controller or the like and may be interfaced with control elements for the chain conveyor or other automation elements so that the dynamic traction control can synchronize with other activities related to the chain conveyor. For example, the dynamic traction control can be co-ordinated or synchronized with an actuator for a pallet stopper or the like. In this way, pallets can be stopped and then traction control can be used to have the pallets speed up quickly once the pallet stopper is removed. The control and synchronization may be handled by software/computer code stored in a memory that can be executed on a processor either within the controller or external to the controller.

It will be understood that the system for dynamic traction control can be configured to be of various lengths and can be placed at different locations along the chain conveyor. This will allow for configurable sections of the chain conveyor to have dynamic traction control when activated by the controller.

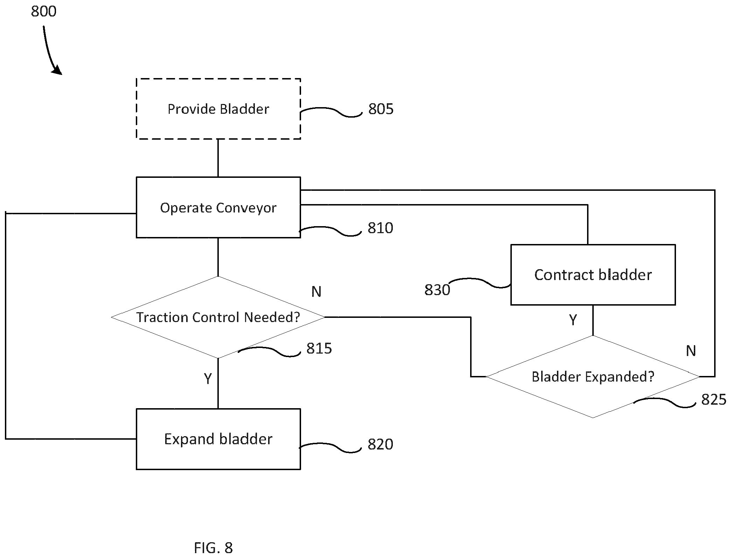

Figure 8 is a flowchart of a method for dynamic traction control 800 on a chain conveyor. The chain conveyor may be provided with or retrofitted to include a flexible member/bladder of the type described above. As illustrated in Fig. 8, at 805, a flexible bladder is provided, if needed. At 810, the chain conveyor is operated and, at 815, the controller determines if traction control is needed. If so, at 820, the controller expands the bladder to provide traction control and the method returns to 810 and the chain conveyor is operated. If traction control is not needed at 815, then at 825, the controller checks if the bladder is expanded (e.g. due to a previous need for traction control). If yes, at 830, the controller contracts the bladder, and, if no, the method returns to operate the conveyor at 810.

It will be understood that the above method operates from a default state of contracted but one of skill in the art will understand that the method may alternatively operate from a default state of inflated.

In some embodiments, expanding the bladder may include expanding the bladder via a series of stages/levels depending on the amount of traction required or the like. Further, as noted above, the amount of expansion, whether overall or via the stages/steps may be based on various parameters such as the weight of the pallets, speed of the chain, and the like.

In the preceding description, for purposes of explanation, numerous details are set forth in order to provide a thorough understanding of the embodiments. However, it will be apparent to one skilled in the art that these specific details may not be required. It will also be understood that aspects of each embodiment may be used with other embodiments even if not specifically described therein. Further, some embodiments may include aspects that are not required for their operation but may be preferred in certain applications. In other instances, well-known structures may be shown in block diagram form in order not to obscure the understanding. For example, specific details are not provided as to whether the embodiments described herein are implemented as a software routine, hardware circuit, firmware, or a combination thereof.

Embodiments of the disclosure or elements thereof, such as controllers or the like, can be represented as a computer program product stored in a machine-readable medium (also referred to as a memory, a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or nonvolatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with other modules and elements, including circuitry or the like, to perform the described tasks.

The above-described embodiments are intended to be examples only. Alterations, modifications and variations can be effected to the particular embodiments by those of skill in the art without departing from the scope, which is defined solely by the claims appended hereto.

## Claims

1. A chain conveyor comprising:
a frame;
at least one chain configured to move on the frame, the at least one chain including a plurality of links and at least some of the plurality of links supporting a plurality of bearings that are configured to rotate relative to the links; and
a dynamic traction control system including:
a flexible member provided to the frame adjacent to but not touching a surface of the plurality of bearings;
a control body provided to the flexible member;
a pressure device in fluid connection with the control body such that the pressure device is configured to selectively expand the flexible member to come in contact with the bearings or contract the flexible member out of contact with the bearings; and
a controller in electronic communication with the pressure device to expand the flexible member to provide traction control when needed and contract the flexible member when traction control is not needed.

2. A chain conveyor according to claim 1, wherein the flexible member has an elongated shape along the direction of the chain.

3. A chain conveyor according to claim 1, wherein the control body is at one end of the flexible member and a stopper body is provided at another end of the flexible member and the stopper body is configured to seal the flexible member and hold the flexible member in place on the frame.

4. A chain conveyor according to claim 1, wherein the flexible member is cylindrical.

5. A chain conveyor according to claim 1, wherein the flexible member comprises an internal inflatable bladder and an external covering for the internal inflatable bladder.

6. A chain conveyor according to claim 1, wherein the pressure device comprises a pneumatic or hydraulic system.

7. A chain conveyor according to claim 1, wherein the at least one chain comprises chain bearings that move on the frame along at least one rail provided to the frame, wherein the rail has a circular profile.

8. A chain conveyor according to claim 1, wherein the controller is configured to expand or contract the flexible member using a plurality of levels.

9. A method for dynamic traction control in a chain conveyor, the chain conveyor including a chain provided with a plurality of bearings for carrying pallets, the method comprising:
providing a flexible bladder adjacent to the bearings; and
selectively expanding the flexible bladder to make contact with the bearings when additional traction is required.

10. A method according to claim 9, wherein the selectively expanding the flexible bladder is based on parameters related to the pallet and chain conveyor.

11. A method according to claim 9, wherein the selectively expanding comprises selecting a level of expansion.

12. A method according to claim 9, wherein the selectively expanding comprises contracting the flexible bladder when additional traction is not required.

13. A kit to retrofit a chain conveyor to provide dynamic traction control, the chain conveyor comprising a frame, at least one chain configured to move on the frame, the at least one chain including a plurality of links supporting a plurality of bearings configured to rotate freely relative to the links, the kit comprising:
a flexible member provided to the frame adjacent to but not touching a surface of the plurality of bearings;
a control body provided to the flexible member;
a pressure device in fluid connection with the control body such that the pressure device is configured to selectively expand the flexible member to come in contact with the bearings or contract the flexible member out of contact with the bearings; and
a controller in electronic communication with the pressure device to expand the flexible member to provide traction control when needed and contract the flexible member when traction control is not needed.

14. A kit according to claim 13, wherein the flexible member has an elongated cylindrical shape with a circular cross-section.

15. A kit according to claim 1, wherein the flexible member comprises an internal inflatable bladder and an external covering for the internal inflatable bladder.
